# EUROPEAN PATENT APPLICATION

(11) **EP 4 712 589 A1**
(43) Date of publication of application: **18.03.2026**
(21) Application number: 24807591.3
(22) Date of filing: 17.05.2024
(51) Int. Cl.: H04W 52/02, H04L 41/0894, H04W 88/14, H04M 15/00

(54) **METHOD AND DEVICE FOR MANAGING ENERGY POLICY IN WIRELESS COMMUNICATION SYSTEM**

(30) Priority: 18.05.2023 KR 20230064419
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); PARK, Jungshin, Suwon-si Gyeonggi-do 16677 (KR)
(74) Representative: Gulde & Partner
(86) International application number: PCT/KR2024/006696
(87) International publication number: WO 2024/237720

(57) **Abstract**

The present disclosure relates to a 5G or 6G communication system for supporting higher data transmission rates. A method for processing a control signal in a wireless communication system, of the present disclosure, comprises the steps of: receiving a first control signal transmitted from a base station; processing the received first control signal; and transmitting, to the base station, a second control signal generated on the basis of the processing.

## Description

### [Technical Field]

The disclosure relates to a wireless communication system or a mobile communication system. Specifically, the disclosure relates to a method and a device for applying energy policy information in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure proposes a method and a device for applying a policy of controlling energy usage used for traffic transmission/reception in a wireless communication system or a mobile communication system. The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

A method performed by a policy control function (PCF) entity in a wireless communication system according to an embodiment of the disclosure includes receiving, from a session management function (SMF) entity, a first message requesting policy information for a packet data unit (PDU) session, determining an energy policy related to the PDU session, and transmitting, to the SMF entity, a second message including the energy policy related to the PDU session.

### [Advantageous Effects of Invention]

In a wireless communication system proposed in the disclosure, the amount of energy consumed for traffic transmission/reception may be controlled to a maximum value or less by a method for monitoring the amount of energy consumed for traffic transmission/reception and controlling the same according to a policy.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of a 5G system according to various embodiments of the disclosure.
FIG. 2 illustrates a process in which a PCF determines an energy budget policy and provides energy budget information according to various embodiments of the disclosure.
FIG. 3 illustrates a process in which a UE/RAN/UPF transmits an energy report to a PCF or an energy budget control (EBC) NF and the PCF or the EBC NF updates an energy policy or another policy, based on the energy report according to various embodiments of the disclosure.
FIG. 4 illustrates a structure of a base station according to various embodiments of the disclosure.
FIG. 5 illustrates a structure of a UE according to various embodiments of the disclosure.
FIG. 6 illustrates a structure of a network function (or network entity) according to various embodiments of the disclosure.

### [Best Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

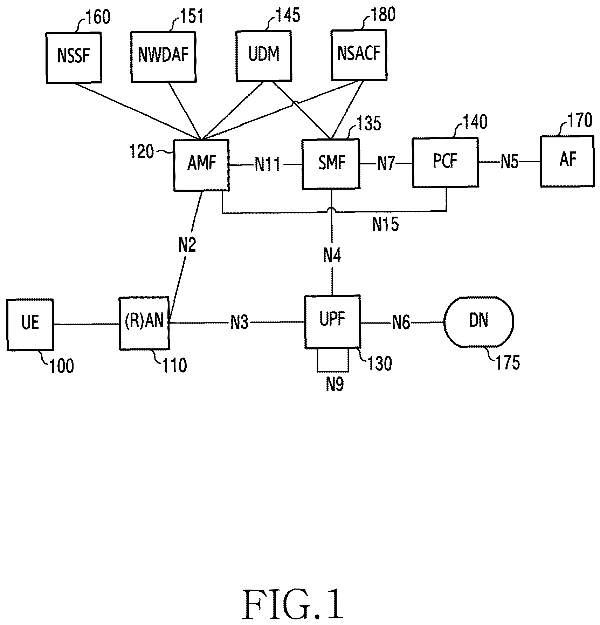

FIG. 1 illustrates a structure of a 5G system according to various embodiments of the disclosure.

A 5G mobile communication network includes a 5G user equipment (UE, terminal), a 5G radio-access network (RAN, a base station, 5G nodeB (gNB), evolved nodeB (eNB), etc.), and a 5G core network. The 5G core network may include network functions (NFs), such as an access and mobility management function (AMF) which provides a mobility management function of a UE, a session management function (SMF) which provides a session management function, a user plane function (UPF) which serves to transfer data, a policy control function (PCF) which provides a policy control function, a unified data management (UDM) which provides a function to manage data, such as subscriber data and policy control data, and a unified data repository (UDR) which stores data of various network functions (NFs) such as the UDM.

In 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. In order to satisfy specialized requirements of a service/application, a network operator provides a service by configuring a virtual end-to-end network referred to as a network slice. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices.

The mobile communication system is provided with identity information and quality of service (QoS) requirements of UEs capable of participating in federated learning from an external third-party server (application function (AF)), selects UEs to which network resources are allowable and allocates the network resources (i.e., QoS flow), based on the requirements, and transmits the result to the AF. Among the terms as used in the description of the disclosure, the term "aggregated QoS" may be used and interpreted to be synonymous with "same QoS", "identical QoS", and "group QoS". For example, "aggregated QoS request indicator" may be used and interpreted to be synonymous with "same QoS request indicator", "aggregated QoS information" may be used and interpreted to be synonymous with "same QoS information", and "aggregated QoS notification indicator" may be used and interpreted to be synonymous with "same QoS notification indicator".

As used herein, EBC NF(s) may be located in one of the following NFs: PCF, NWSAF, and OAM. However, the disclosure is not limited thereto.

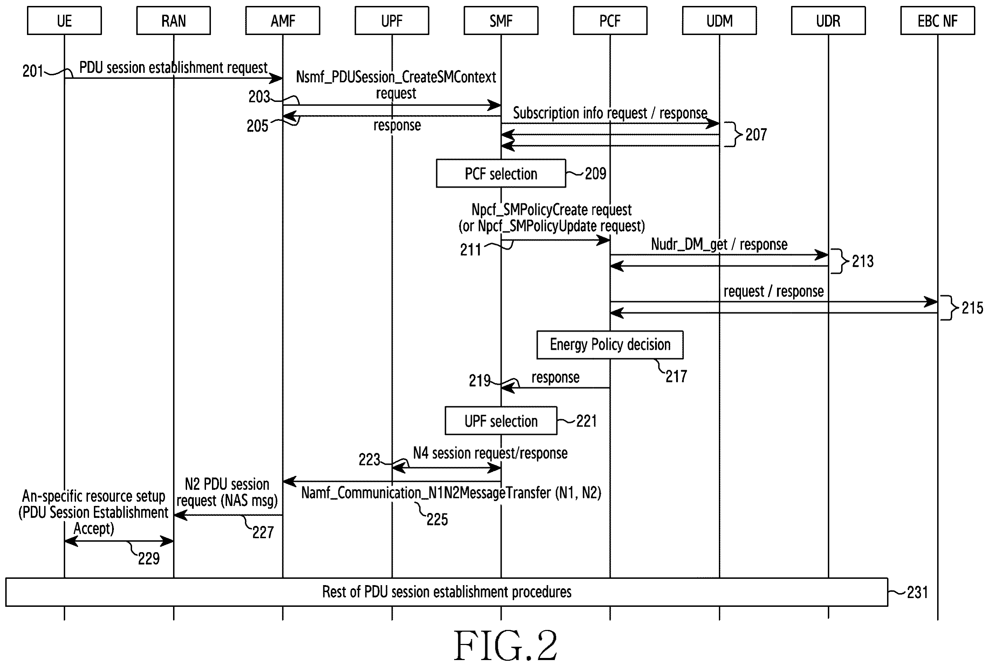

FIG. 2 illustrates a process in which a PCF determines an energy budget policy and provides energy budget information according to various embodiments of the disclosure.

Referring to FIG. 2, in operation 201, a UE may transmit a PDU session create request for transmitting application traffic. The UE may transmit a PDU session establishment request including the following information to a network.

Single network slice selection assistance information (S-NSSAI): S-NSSAI of one of allowed slices may be included.

UE-requested DNN: A data network name (DNN) may be included.

PDU session ID: Indicates a PDU session identifier.

N1 SM container (PDU session establishment request): Information to be transmitted to an SMF, which may include a PDU session establishment request.

However, included information is not limited thereto.

In operation 203, an AMF may include information included in a message received from the UE through an RAN in a message to be transmitted to the SMF. The message may include information, such as a SUPI (UE subscriber information identifier), a selected DNN, the UE-requested DNN, S-NSSAI(s), a PDU session ID, a request type, an N1 SM container (PDU session establishment request), an access type, and an energy budget request, but is not limited thereto.

The AMF may include an energy budget request, based on configuration information about the AMF or information received from the UE.

In operation 203, the AMF may transmit an SM context create request message to the SMF. The SM context create request message may include one or more of the information, such as the PDU session ID, the DNN, the S-NSSAI, the access type, and the energy budget request, received in operation 201.

In operation 205, the SMF may transmit a response message to the AMF in response to the SM context create request message received from the AMF.

In operation 207, the SMF may transmit a subscription info request message requesting session management subscription data to a UDM. The subscription info request message may include an indicator indicating the session management subscription data, the DNN, S-NSSAI of an HPLMN, a serving PLMN ID, and the SUPI. When receiving the subscription info request message from the SMF, the UDM may include the session management subscription data corresponding to the SUPI, the DNN, the S-NSSAI, and the PLMN ID requested by the SMF in a subscription info response message, which is a response message to be transmitted to the SMF. The UDM may obtain corresponding information from a UDR.

In operation 209 and operation 211, the SMF may transmit a policy create or update request message to a PCF to receive policy information about a PDU session. The message may include the following information, but is not limited thereto.
- S-NSSAI: S-NSSAI received in operation 203
- DNN: DNN received in operation 203
- SUPI: SUPI received in operation 203
- Energy budget request: may be included when received in operation 203.

In operation 213, when receiving the policy request message for the PDU session from the SMF in operation 211, the PCF may request policy information related to the session from the UDM or UDR. Subsequently, the SMF may receive the policy information related to the session from the UDM or the UDR. The policy information related to the session may include the following information, but is not limited thereto.
- Energy budget information:
   - Total energy usage (e.g., a maximum value) allowed when the UE transmits/receives traffic may be included (i.e., a UE energy budget).
   - Total energy usage (e.g., a maximum value) allowed when the RAN transmits/receives traffic may be included (i.e., an RAN energy budget).
   - Total energy usage allowed when the RAN and a UPF transmit/receive traffic may be included (i.e., a network energy budget).
   - Total energy usage allowed when the UE, the RAN, and the UPF transmit/receive traffic for an application may be included (i.e., a total energy budget).
- UEs subject to energy control: Information indicating UEs to which an energy budget is applied, which may include at least one of a group ID, a list of UE ID(s), and an AF ID.
- Application subject to energy control: Information indicating traffic to which an energy budget is applied (e.g., an application service provider (ASP) ID, an application ID, a server MAC address, or IP 3 tuples (i.e., a server IP address, a port number, and protocol information)) may be included.
- Time information: Information about time in which an energy budget is applicable may be included. Here, an indicator indicating whether to periodically apply the energy budget may be included along with the time information. Alternatively, information in the form of a period (e.g., from 2023/3/10 to 2023/3/28) may be included.
- Area information: Information about an area in which an energy budget is applicable may be included. The area information may include a TAI(s), a cell ID(s), and/or geographical location information.

In operation 215, the PCF may determine to apply an energy policy for the PDU session (or for specific traffic within the PDU session) when energy budget or energy profile information is included in the information received in operation 213, when energy budget request information is included in the information received in operation 211, or based on autonomous configuration information. When determining to apply the energy policy, based on the information received in operation 213, the PCF may determine whether to apply the energy policy by comparing the SUPI included in the information received from the SMF in operation 211 and a UE location with the UEs subject to energy control and the area information received in operation 213.

When determining to apply the energy policy, the PCF may request an EBC NF to determine energy policy information.

Specifically, the PCF may transmit at least one of the application subject to energy control, the UEs subject to energy control, and the area information received in operation 213 together with energy budget information to the EBC NF.

Further, the PCF may include at least one of an energy profile mapping request indicator and an energy budget information conversion request indicator in a message transmitted to the EBC NF.

In operation 215, the EBC NF may determine an energy policy, based on the message received from the PCF, and when receiving the message from the PCF, the EBC NF may convert the energy budget information included in the message received from the PCF to an energy budget for a smaller entity unit (e.g., an energy budget for the UPF, the UE, or the RAN). Here, the EBC NF may utilize at least one of other pieces of information included in operation 215. The foregoing conversion may be performed when the information received in operation 215 includes the energy budget information conversion request indicator, or may be performed by determination of the EBC NF even though the indicator is not included.

For example, when a network energy budget (or network energy budget for an application) is included in the information received in operation 215, the EBC NF may convert the network energy budget to an RAN energy budget (or RAN energy budget for an application) or a UPF energy budget (or UPF energy budget for an application).

Alternatively, for example, when a total energy budget (for an application) is included in the information received in operation 215, the EBC NF may convert the total energy budget to a UE energy budget (or UE energy budget for an application), an RAN energy budget (or RAN energy budget for an application), or a UPF energy budget (or UPF energy budget for an application).

For the foregoing conversion, the EBC NF may utilize statistical information indicating energy consumed for a certain time when the UE transmits/receives traffic (or traffic for the application), statistical information indicating energy consumed for a certain time when the RAN transmits/receives traffic (or traffic for the application), or statistical information indicating energy consumed for a certain time when the UPF transmits/receives traffic (or traffic for the application).

The EBC NF may calculate an energy budget(s) allowable in the network for each entity according to a configuration with respect to the information (or information that is a converted form of the information) included in the energy budget information received in operation 215.

The EBC NF may map the allowable energy budget for each entity to an energy profile(s). The EBC NF may use at least one of the other pieces of information included in operation 215. The foregoing mapping may be performed when the information received in operation 215 includes the energy profile mapping request indicator, or may be performed by determination of the EBC NF even though the indicator is not included.

A set of energy profiles may indicate a set of a part(s) of energy usage used by an entity (e.g., which may be the UE, the RAN, the UPF, the network (i.e., the RAN and the UPF), or one of all (i.e., the UE, the RAN, and the UPF)) when transmitting/receiving traffic, and each energy profile may be expressed by minimum energy usage and maximum energy usage. A unit of energy usage may be joule (or watt).

The entity may be configured to one of the energy profiles included in the set of energy profiles, and may adjust energy usage according to the energy profile when configured. An energy profile to turn off device power for traffic transmission/reception may also exist.

For example, energy profile 1 may be expressed as 0.5 to 1.0 kilojoules (or kilowatts), and energy profile 2 may be expressed as 1.0 to 1.5 kilo Joule (or kilo Watt), in which example the entity configured to energy profile 1 may adjust energy usage to range from 0.5 to 1.0 kilojoules (or kilowatts) in traffic transmission/reception.

For example, when deriving a UPF energy profile(s) for the UPF energy budget, the EBC NF may include an energy profile indicating a part including energy usage included in the UPF energy budget and close energy profiles together in the UPF energy profile(s).

The set of energy profiles may be stored in the EBC NF independently for each of the UE, the RAN, the UPF, the network (i.e., the RAN and the UPF), and all (i.e., the UE, the RAN, and the UPF).

An energy profile for a specific entity may be configured for all traffic or specific traffic (e.g., traffic for a specific application) transmitted by the entity.

The EBC NF may obtain and store the set of energy profiles for each entity through an OAM (not shown) or a network data analytics function (NWDAF) (not shown) before receiving the message in operation 215.

The EBC NF may include the following information in a response message to be transmitted to the PCF.
- Candidate energy budget(s): An energy budget set allowed for each entity may be included for one or more entities.
- Energy profile(s): An energy profile(s) allowed for each entity may be included for one or more entities.
- Result: Processing result of energy budget conversion and/or energy profile mapping (e.g., success or failure) may be included. When indicating a failure, information indicating a cause of the failure may be included.

When the candidate energy budget(s) and/or the energy profile(s) are included in the message received from the EBC NF in operation 215, the PCF may determine an energy policy, based on the candidate energy budget(s) and/or the energy profile(s) in operation 217.

The determined energy policy may be in the form of a candidate energy budget or energy profile for each entity.

The PCF may generate a PCC rule(s), and may include the PCC rule(s) in a message to be transmitted to the SMF. In operation 219, the message transmitted by the PCF to the SMF may include the following information.
- PCC rule ID
- Service data flow (SDF) template (e.g., IP filter information indicating traffic may be included)
- 5G QoS identifier (5QI) (e.g., 5QI authorized for an SDF)
- Energy policy: The energy policy determined in operation 217 may be included. The energy policy may be transmitted by being included in the PCC rule.
- Energy notification: May be included when a notification is required for an entity (e.g., the UE, the RAN, or the UPF) to which the energy budget or the energy profile in the energy policy needs to be applied. An energy notification may be configured for each entity. The energy notification may be transmitted by being included in the PCC rule.

In operation 221, the SMF may select the UPF, based on the S-NSSAI and the DNN for the PDU session.

In operation 223, the SMF may transmit an N4 message to the UPF, based on the PCC rule. The information may include the following information.
- UPF energy profile and/or UPF energy budget: When the message received in operation 219 includes the energy profile for the UPF, this information may be included. Alternatively, the message received in operation 219 includes the energy budget for the UPF, this information may be included.
- N4 session ID: An N4 session identifier may be included.
- S-NSSAI and DNN
- Application descriptor: Information indicating target traffic to which the UPF energy profile and/or the UPF energy budget is applied (e.g., an application service provider (ASP) ID, an application ID, a server MAC address, or IP 3 tuples (i.e., a server IP address, a port number, and protocol information)) may be included.
- N4 rule: A packet processing rule generated based on the PCC rule may be included.
- Energy notification endpoint: When the PCC rule includes a UPF energy notification, an address to receive an energy usage notification from the UPF may be included. The address may include an address of the PCF or an address of the EBC NF.

When receiving the UPF energy profile and/or the UPF energy budget, the UPF monitors the amount of energy used for traffic transmission/reception for the PDU session (or transmission/reception of traffic corresponding to the application descriptor in the PDU session when receiving the application descriptor), and adjusts energy usage considering the UPF energy profile and/or the UPF energy budget. When the usage is close to or reaches a maximum value included in the received UPF energy profile and/or UPF energy budget, the UPF may notify the PCF or EBC NF of the usage being close to or reaching the maximum value.

When the received message includes the energy notification endpoint, the UPF may periodically transmit the energy usage to the address.

Subsequently, the UPF may transmit an N4 response message to the SMF. The N4 response message may include CN tunnel information about the PDU session.

In operation 225, the SMF may include the following information in a message to be transmitted to the AMF. Here, N2 SM information indicates information to be transmitted to the RAN, and an N1 SM container indicates information to be transmitted to the UE:
PDU session ID: The PDU session identifier is included.

N2 message (PDU session ID, QFI(s) (i.e., QoS flow identifier), QoS profile(s) (information including a requirement of a QoS flow), CN tunnel information (e.g., an address to transmit data-plane data received by the RAN from the UE for the PDU session), S-NSSAI from the allowed NSSAI, session-aggregate maximum bit rate (AMBR) (maximum sum of bitrates for a session), RAN energy profile, RAN energy budget (configured based on the energy policy received from the PCF in operation 219), and energy notification endpoint (when the PCC rule includes an energy notification for the RAN, an address to receive an energy usage notification from the RAN may be included. The address may include the address of the PCF or the address of the EBC NF.)

N1 message (PDU session establishment accept): A PDU session establishment accept message may include the QoS rule, the DNN, the S-NSSAI, a UE energy profile, a UE energy budget (configured based on the energy policy received from the PCF in operation 219), and an energy notification endpoint (when the PCC rule includes an energy notification for the UE, an address to receive an energy usage notification from the UE may be included. The address may include the address of the PCF or the address of the EBC NF.).

In operation 227, the N1 message received from the SMF may be included in the N2 message received from the SMF. The AMF may transmit information included in the N2 message to the RAN.

When the RAN receives the RAN energy profile and/or the RAN energy budget, the RAN monitors the amount of energy used for traffic transmission/reception for the PDU session (or transmission/reception of traffic corresponding to the application descriptor in the PDU session when receiving the application descriptor), and adjusts energy usage considering the RAN energy profile and/or the RAN energy budget. When the usage is close to or reaches a maximum value included in the received RAN energy profile and/or RAN energy budget, the RAN may notify the PCF or EBC NF of the usage being close to or reaching the maximum value.

When the received message includes the energy notification endpoint, the RAN may periodically transmit the energy usage to the address.

In operation 229, the RAN may transmit information included in the N1 message included in the N2 message received from the AMF to the UE.

When receiving the UE energy profile and/or the UE energy budget, the UE may operate in the same manner as when the RAN receives the RAN energy profile and/or the RAN energy budget.

In operation 231, the remaining PDU session establishment procedure may be performed.

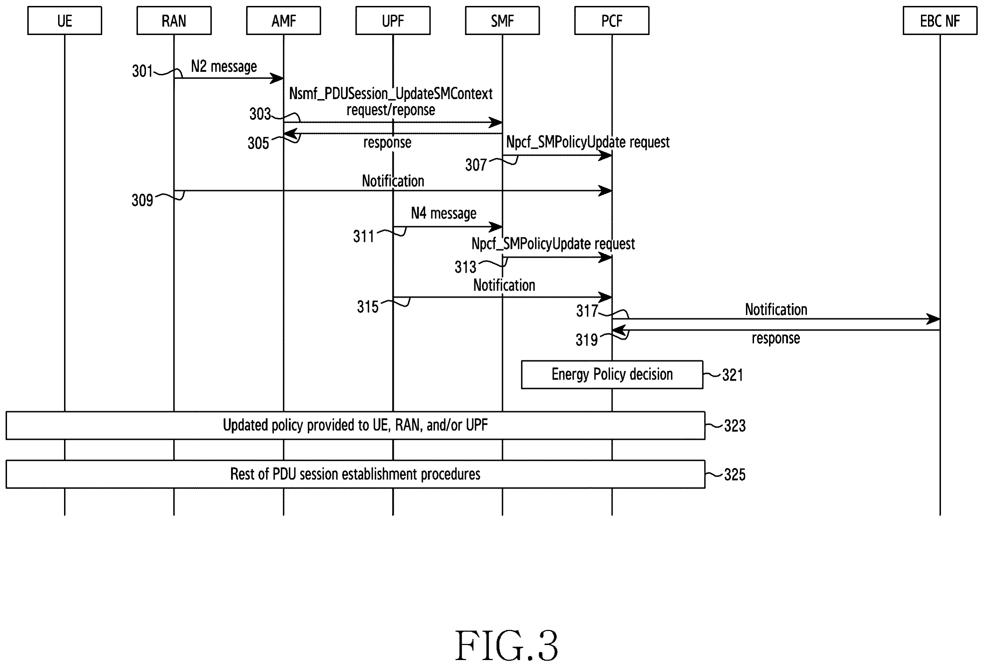

FIG. 3 illustrates a process in which a UE/RAN/UPF transmits an energy report to a PCF or an EBC NF and the PCF or the EBC NF updates an energy policy or another policy, based on the energy report according to various embodiments of the disclosure.

Referring to FIG. 3, in operation 301, an RAN may transmit, to an AMF, a message for reporting energy usage or an energy usage warning to a PCF or EBC NF through the AMF. The message may include the following information.
- PDU session ID: A PDU session identifier may be included.
- Application descriptor: Information (IP-tuple or the like) indicating application traffic may be included.
- RAN energy warning information: When the amount of energy used for traffic transmission/reception for the PDU session subject to an RAN energy usage or energy policy (or transmission/reception of traffic corresponding to the application descriptor in the PDU session) does not satisfy a configured RAN energy profile (or a received RAN energy budget) (e.g., when the traffic transmission/reception is expected to use more energy or when has already used all energy), information indicating a warning may be included.
- RAN energy usage: The amount of energy used for traffic transmission/reception for the PDU session (or transmission/reception of traffic corresponding to the application descriptor within the PDU session) may be included. This information may be included when the RAN receives an energy notification endpoint from the AMF.

In operation 303, the AMF may transmit the information received in operation 301 to an SMF. The message may include an SM context ID for the PDU session ID received in operation 301.

In operation 305, the SMF may transmit a response message to the AMF.

In operation 307, the SMF may transmit the message received in operation 303 to the PCF. The message may include a policy association ID.

In operation 309, when the RAN supports direct reporting to the PCF, the RAN may transmit a message for reporting the energy usage or the energy usage warning to the PCF or EBC NF to the PCF. The message may include the same information as that transmitted by the RAN to the AMF in operation 301.

In operation 311, a UPF may transmit, to the SMF, a message for reporting energy usage or an energy usage warning to the PCF or EBC NF through the SMF. The message may include the following information.
- PDU session ID or N4 session: A PDU session identifier (or N4 session identifier) may be included.
- Application descriptor: Information (IP-tuple or the like) indicating application traffic may be included.
- UPF energy warning information: When the amount of energy used for traffic transmission/reception for the PDU session subject to an UPF energy usage or energy policy (or transmission/reception of traffic corresponding to the application descriptor in the PDU session) does not satisfy a configured UPF energy profile (or a received UPF energy budget) (e.g., when the traffic transmission/reception is expected to use more energy or when has already used all energy), information indicating a warning may be included.
- UPF energy usage: The amount of energy used for traffic transmission/reception for the PDU session (or transmission/reception of traffic corresponding to the application descriptor within the PDU session) may be included. This information may be included when the UPF receives an energy notification endpoint.

In operation 313, the SMF may include the information received from the UPF in a message to be transmitted to the PCF. Here, a policy association ID for the PDU session ID may be included.

In operation 315, when the UPF supports direct reporting to the PCF, the UPF may transmit a message for reporting the energy usage or the energy usage warning to the PCF or EBC NF to the PCF. The message may include the same information as that transmitted by the UPF to the SMF in operation 311.

When the message is received in operation 307, operation 309, operation 313, or operation 315 and when the message includes energy usage information about each entity (e.g., the RAN or the UPF), the PCF may internally update energy usage information about each entity corresponding to the PDU session or the application description within the PDU session, based on the energy usage information about each entity in operation 317.

When the EBC NF manages the energy usage information about each entity, the PCF may include the energy usage information about each entity (e.g., the RAN or the UPF) in a message to be transmitted to the EBC NF.

When the message is received in operation 307, operation 309, operation 313, or operation 315 and when the message includes energy warning information about an entity (e.g., the RAN or the UPF), the PCF may determine to update an energy policy or to update another policy (e.g., to update a QoS parameter). When determining to update the energy policy, the PCF may transmit a message requesting the energy policy from the EBC NF. The message may include the energy warning information about the entity (e.g., the RAN or the UPF).

When the message received from the PCF includes information indicating the PDU session and the application description (e.g., the PDU session ID and the IP tuples) along with the energy usage information about the entity (e.g., the RAN or the UPF), the EBC NF may update and store energy usage stored for the PDU session of the entity in operation 319.

When the message received from the PCF includes information indicating the PDU session and the application description (e.g., the PDU session ID and the IP tuples) along with the energy usage information about the entity (e.g., the RAN or the UPF) and further includes the energy warning information about the entity (e.g., the RAN or the UPF), the EBC NF may re-determine the energy policy for the session.

When receiving energy warning information about a single entity (e.g., the UPF), the EBC NF may re-determine an energy profile for another entity.

The EBC NF may recalculate an energy profile(s) per entity and/or an energy budget(s) per entity, and may include the same in a response message to be transmitted to the PCF.

In operation 321, the PCF may re-determine the energy policy considering the information received in operation 307, the information received in operation 309, the information received in operation 313, or the information received in operation 315. When receiving an energy profile(s) per entity and/or an energy budget(s) per entity from the EBC NF in operation 319, the PCF may determine the energy profile per entity and/or an energy budget per entity by using the information.

When the energy policy and/or other policies (e.g., an UL/DL session AMBR and other QoS parameters) for the PDU session ID and the application description in the PDU session are updated, the PCF may transmit the updated PCC rule to the SMF, and the SMF may transmit a new energy profile (or energy budget) and/or QoS information (a QoS rule for the UE, a QoS profile and a session AMBR for the RAN, and an N4 rule and a session AMBR for the UPF) to the UPF, the RAN, and/or the UE in the same manner as in operation 219 to operation 229 of FIG. 2 in operation 323.

In operation 325, the remaining PDU session modification procedure may be performed.

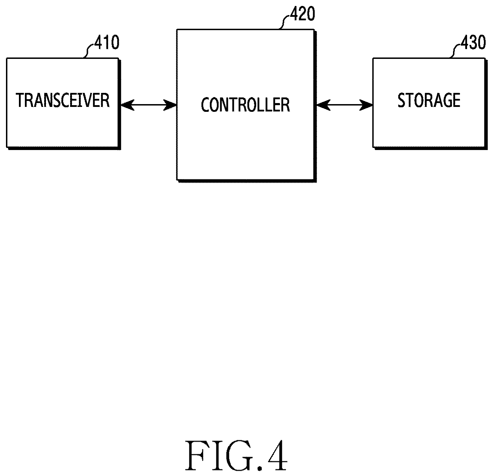

FIG. 4 illustrates a structure of a base station according to various embodiments of the disclosure.

Referring to FIG. 4, the base station may include a transceiver 410, a controller 420, and a storage 430. The transceiver 410, the controller 420, and the storage 430 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 410 and the controller 420. Furthermore, the transceiver 410, the controller 420, and the storage 430 may be implemented in the form of a single chip.

The transceiver 410 refers to a base station receiver and a base station transmitter as a whole, and may transmit/receive signals with UEs, other base stations, and other network devices. The transmitted/received signals may include control information and data. The transceiver 410 may transmit, for example, system information, synchronization signals, or reference signals to UEs. To this end, the transceiver 410 may include an RF transmitter configured to up-convert and amplify the frequency of transmitted signals, an RF receiver configured to low-noise-amplify received signals and down-convert the frequency thereof, and the like. However, this is only an embodiment of the transceiver 410, and the components of the transceiver 410 are not limited to the RF transmitter and the RF receiver. The transceiver 410 may include wired/wireless transceivers, and may include various components for transmitting/receiving signals. In addition, the transceiver 410 may receive signals through a communication channel (e.g., a radio channel), output the same to the controller 420, and transmit signals output from the controller 420 through the communication channel. Furthermore, the transceiver 410 may receive communication signals, output same to a processor, and transmit signals output from the processor to UEs, other base stations, or other network entities through a wired/wireless network.

The storage 430 may store programs and data necessary for operations of the base station. In addition, the storage 430 may store control information or data included in signals acquired by the base station. The storage 430 may include storage media such as a ROM, a RAM, a hard disk, a CD-ROM, and a DVD, or a combination of storage media. In addition, the storage 430 may store at least one of information transmitted/received through the transceiver 410 and information generated through the controller 420.

As used herein, the controller 420 may be defined as a circuit, an application specific integrated circuit, or at least one processor. The processor may include a communication processor (CP) which performs control for communication and an application processor (AP) which controls upper layers such as application programs. The controller 420 may control the overall operation of the base station according to the embodiments proposed in the disclosure. For example, the controller 420 may control signal flows between the respective blocks to perform operations according to the above-described flowcharts.

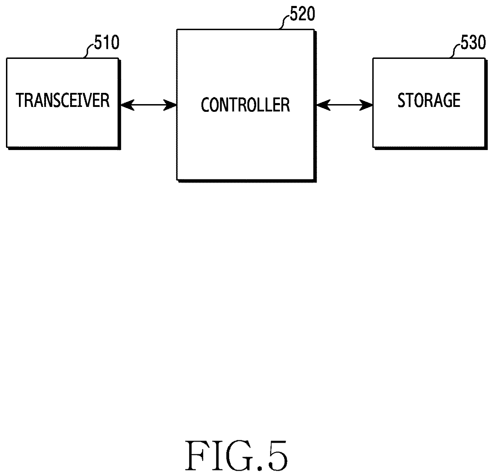

FIG. 5 illustrates a structure of a UE according to various embodiments of the disclosure.

Referring to FIG. 5, the UE may include a transceiver 510, a controller 520, and a storage 530. The transceiver 510, the controller 520, and the storage 530 may be operated according to the above-described communication methods of the UE. Components of the UE are not limited to the above-described example. For example, the UE may include a larger or smaller number of components than the above-described components. For example, the UE may include the transceiver 510 and the controller 520. Furthermore, the transceiver 510, the controller 520, and the storage 530 may be implemented in the form of a single chip.

The transceiver 510 refers to a UE receiver and a UE transmitter as a whole, and may transmit/receive signals with base stations, other UEs, and other network entities. The signals transmitted/received with base stations may include control information and data. The transceiver 510 may receive, for example, system information, synchronization signals, or reference signals from the base station. To this end, the transceiver 510 may include an RF transmitter configured to up-convert and amplify the frequency of transmitted signals, an RF receiver configured to low-noise-amplify received signals and down-convert the frequency thereof, and the like. However, this is only an embodiment of the transceiver 510, and the components of the transceiver 510 are not limited to the RF transmitter and the RF receiver. Also, the transceiver 510 may include wired/wireless transceivers, and may include various components for transmitting/receiving signals. In addition, the transceiver 510 may receive signals through a radio channel, output the same to the controller 520, and transmit signals output from the controller 520 through the radio channel. Furthermore, the transceiver 510 may receive communication signals, output same to a processor, and transmit signals output from the processor to network entities through a wired/wireless network.

The storage 530 may store programs and data necessary for operations of the UE. In addition, the storage 530 may store control information or data included in signals acquired by the UE. The storage 530 may include storage media such as a ROM, a RAM, a hard disk, a CD-ROM, and a DVD, or a combination of storage media.

As used herein, the controller 520 may be defined as a circuit, an application specific integrated circuit, or at least one processor. The processor may include a communication processor (CP) which performs control for communication and an application processor (AP) which controls upper layers such as application programs. The controller 520 may control the overall operation of the UE according to the embodiments proposed in the disclosure. For example, the controller 520 may control signal flows between the respective blocks to perform operations according to the above-described flowcharts.

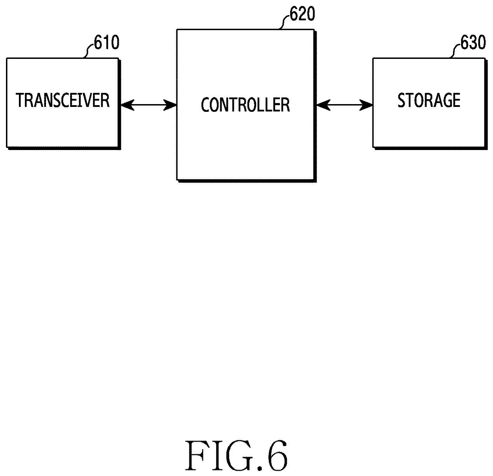

FIG. 6 illustrates a structure of a network function (or network entity) according to various embodiments of the disclosure. The network function (or network entity) illustrated in FIG. 6 may correspond to various functions or entities of the core network described above in FIGS. 1 to 3.

As illustrated in FIG. 6, the network function (NF) (or network entity (NE)) of the disclosure may include a transceiver 610, a memory 620, an NF controller (or processor) 630. The NF controller 630, the transceiver 610, and the memory 620 of the NF (or NE) may operate according to the above-described communication methods of the NF (or NE). However, components of the NF (or NE) are not limited to the above-described example. For example, the NF (or NE) may include a larger or smaller number of components than the above-described components.

The transceiver 610 refers to an NF (or NE) receiver and an NF (or NE) transmitter as a whole, and may transmit/receive signals with UEs, base stations, and/or other NFs (or NEs). The transmitted/received signals may include control information and data. To this end, the transceiver 610 may communicate with nodes or base stations of the core network via wired or wireless transceivers. However, this is only an example of the transceiver 610, and the transceiver 610 may also include an RF transmitter configured to up-convert and amplify the frequency of transmitted signals, an RF receiver configured to low-noise-amplify received signals and down-convert the frequency thereof, etc., and may include various components for signal transmission or reception.

In addition, the transceiver 610 may receive signals through a communication channel (e.g., a radio channel), output same to the NF controller 630, and transmit signals output from the NF controller 630 through the communication channel. Furthermore, the transceiver 610 may receive communication signals, output same to the NF controller 630, and transmit signals output from the NF controller 630 to UEs, base stations, or network entities through a wired/wireless network.

The memory 620 may store programs and data necessary for operations of the NF (or NE). In addition, the memory 620 may store control information or data included in signals acquired by the NF (or NE). The memory 620 may include storage media such as a ROM, a RAM, a hard disk, a CD-ROM, and a DVD, or a combination of storage media.

The NF controller 630 may control a series of procedures so that the NF (or NE) can operate according to the aforementioned embodiments of the disclosure. The NF controller 630 may include one or more processors. Methods disclosed in the claims or methods according to the embodiments described in the specification of the disclosure may be implemented by hardware, software, or a combination of hardware and software.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a policy control function, PCF, entity in a wireless communication system, the method comprising:
receiving, from a session management function, SMF, entity, a first message requesting policy information for a packet data unit, PDU, session;
identifying an energy policy associated with the PDU session; and
transmitting, to the SMF entity, a second message including the energy policy associated with the PDU session.

2. The method of claim 1, wherein the second message includes a policy and charging control, PCC, rule ID, a quality of service, QoS, and information related to an energy budget.

3. The method of claim 1, further comprising:
transmitting, to a unified data repository, UDR, entity, a third message requesting information associated with an energy policy, based on the first message; and
receiving, from the UDR entity, a fourth message including the information associated with the energy policy,
wherein the information associated with the energy policy comprises energy budget information and information for a target to which the energy policy is applied.

4. The method of claim 3, further comprising:
transmitting, to an energy budget control, EBC, network function, NF, entity, a fifth message including a conversion indicator for the energy budget information; and
receiving, from the EBC NF entity, a sixth message including allowed energy budget information for each of at least one entity,
wherein the second message includes the allowed energy budget information for each of at least one entity.

5. A method performed by a session management function, SMF, entity in a wireless communication system, the method comprising:
transmitting, to a policy control function, PCF, entity, a first message requesting policy information for a packet data unit, PDU, session; and
receiving, from the PCF entity, a second message including an energy policy associated with the PDU session.

6. The method of claim 5, wherein the second message includes a policy and charging control, PCC, rule ID, a quality of service, QoS, and information related to an energy budget.

7. The method of claim 5, further comprising transmitting, to a user plane function, UPF, entity, a third message including energy budget information related to the UPF entity, based on the second message.

8. The method of claim 5, further comprising:
transmitting, to the AMF entity, a fourth message including energy budget information related to a base station and energy budget information related to a UE, based on the second message.

9. A policy control function, PCF, entity in a wireless communication system, the PCF entity comprising:
a transceiver; and
a controller coupled with the transceiver,
wherein the controller is configured to:
receive from a session management function, SMF, entity, a first message requesting policy information for a packet data unit, PDU, session;
identify an energy policy associated with the PDU session; and
transmit, to the SMF entity, a second message including the energy policy associated with the PDU session.

10. The PCF entity of claim 9, wherein the second message includes a policy and charging control, PCC, rule ID, a quality of service, QoS, and information related to an energy budget.

11. The PCF entity of claim 9, wherein the controller is further configured to:
transmit, to a unified data repository, UDR, entity, a third message requesting information associated with an energy policy, based on the first message; and
receive, from the UDR entity, a fourth message including the information associated with the energy policy, and
wherein the information associated with the energy policy comprises energy budget information and information for a target to which the energy policy is applied.

12. The PCF entity of claim 11, wherein the controller is further configured to:
transmit, to an energy budget control, EBC, network function, NF, entity, a fifth message including a conversion indicator for the energy budget information; and
receive, from the EBC NF entity, a sixth message including allowed energy budget information for each of at least one entity, and
wherein the second message includes the allowed energy budget information for each of at least one entity.

13. A session management function, SMF, entity in a wireless communication system, the SMF entity comprising:
a transceiver; and
a controller coupled with the transceiver,
wherein the controller is configured to:
transmit, to a policy control function, PCF, entity, a first message requesting policy information for a packet data unit, PDU, session; and
receive, from the PCF entity, a second message including an energy policy associated with the PDU session.

14. The SMF entity of claim 13, wherein the second message includes a policy and charging control, PCC, rule ID, a quality of service, QoS, and information related to an energy budget.

15. The SMF entity of claim 13, wherein the controller is further configured to:
transmit, to a user plane function, UPF, entity, a third message including energy budget information related to the UPF entity, based on the second message; and
transmit, to the AMF entity, a fourth message including energy budget information related to a base station and energy budget information related to a UE, based on the second message.
